# FASCICULE DE BREVET EUROPEEN

(11) **EP 2 925 433 B1**
(45) Date de publication et mention de la délivrance du brevet: **08.01.2020**
(21) Numéro de dépôt: 13803184.4
(22) Date de dépôt: 26.11.2013
(51) Int. Cl.: B01J 21/04, B01J 23/88, B01J 23/888, B01J 23/882, B01J 27/185, B01J 27/188, B01J 35/10, C10G 45/08, B01J 37/02, B01J 37/10

(54) **CATALYSEUR COMPRENANT UN SUPPORT OBTENU A PARTIR D'UN GEL D'ALUMINE ET PROCÉDÉ D'HYDRODÉSULFURATION D'UNE COUPE ESSENCE ISSUE D'UNITÉS DE CRAQUAGE CATALYTIQUE**
KATALYSATOR MIT EIMEM AUS ALUMINIUMOXIDGEL HERGESTELLTEN TRÄGER UND VERFAHREN ZUR HYDROENTSCHWEFELUNG EINER DURCH KATALYTISCHEM KRACKEN HERGESTELTEN BENZINFRAKTION
CATALYST COMPRISING A CARRIER OBTAINED FROM A ALUMINA GEL AND METHOD FOR THE HYDRODESULFURATION OF A GASOLINE FRACTION FROM CATALYTIC CRACKING

(30) Priorité: 29.11.2012 FR 1203236
(43) Date de publication de la demande: 07.10.2015
(73) Titulaire: IFP Energies nouvelles, 92500 Rueil-Malmaison (FR)
(72) Inventeur: DAUDIN, Antoine, F-69960 Corbas (FR); DEVERS, Elodie, F-69007 Lyon (FR); LELIAS, Marc-Antoine, F-30100 Ales (FR)
(74) Mandataire: IFP Energies nouvelles
(86) Numéro de dépôt international: PCT/FR2013/052861
(87) Numéro de publication internationale: WO 2014/083273

(56) Documents cités:
- EP-A2- 2 255 873
- WO-A2-02/09870
- FR-A1- 2 895 280
- FR-A1- 2 917 647
- JP-A- 2001 162 168
- JP-A- 2006 061 845
- US-A1- 2002 155 045
- US-A1- 2010 304 963
- US-B1- 6 589 908

## Description

La présente invention concerne un catalyseur d'hydrotraitement, en particulier pour une application en hydrodésulfuration, et un procédé de fabrication d'un tel catalyseur. L'invention a également pour objet un procédé d'hydrodésulfuration mettant en œuvre ledit catalyseur.

### Etat de la technique

Le raffinage pétrolier ainsi que la pétrochimie sont maintenant soumis à de nouvelles contraintes. En effet, tous les pays adoptent progressivement des spécifications sévères en soufre, l'objectif étant d'atteindre par exemple 10 ppm (poids) de soufre dans les essences commerciales en Europe et au Japon. Le problème de réduction des teneurs en soufre se concentre essentiellement sur les essences obtenues par craquage, qu'il soit catalytique (FCC Fluid Catalytic Cracking selon la terminologie anglo-saxonne) ou non catalytique (cokéfaction, viscoréduction, vapocraquage), principaux précurseurs de soufre dans les pools essence.

Une solution, bien connue de l'homme du métier, pour réduire la teneur en soufre consiste à effectuer un hydrotraitement (ou hydrodésulfuration) des coupes hydrocarbonées (et notamment des essences de craquage catalytique) en présence d'hydrogène et d'un catalyseur hétérogène. Cependant ce procédé présente l'inconvénient majeur d'entrainer une chute très importante de l'indice d'octane si le catalyseur mis en œuvre n'est pas assez sélectif. Cette diminution de l'indice d'octane est notamment liée à l'hydrogénation des oléfines présentes dans ce type d'essence de manière concomitante à l'hydrodésulfuration.

Pour surmonter ce problème, c'est-à-dire de fournir des catalyseurs ayant une activité en hydrodésulfuration (HDS) améliorée et une sélectivité maximale en hydrodésulfuration par rapport à la réaction d'hydrogénation des oléfines, il a été développé des catalyseurs d'hydrodésulfuration sélectifs.

D'une façon générale, ces catalyseurs utilisés pour ce type d'application sont des catalyseurs supportés à base de sulfure de métaux de transition contenant un élément du groupe VIB (Cr, Mo, W) et un élément du groupe VIII (Fe, Ru, Os, Co, Rh, Ir, Pd, Ni, Pt). Ainsi dans le brevet US 5 985 136, il est revendiqué qu'un catalyseur présentant une concentration de surface comprise entre 0,5.10⁻⁴ et 3.10⁴ g M0O₃/m² permet d'atteindre des sélectivités élevées (de 93% d'hydrodésulfuration contre 33% d'hydrogénation des oléfines).

Par ailleurs, selon les brevets US 4 140 626 et US 4 774 220, il peut être avantageux d'ajouter un dopant (alcalin, alcalino-terreux) à la phase sulfure conventionnelle (CoMoS) dans le but de limiter l'hydrogénation des oléfines.

Une autre voie permettant d'améliorer la sélectivité intrinsèque des catalyseurs est de tirer bénéfice de la présence de dépôts carbonés à la surface du catalyseur. Ainsi, le brevet US 4 149 965 propose de prétraiter un catalyseur conventionnel d'hydrotraitement de naphta pour le désactiver partiellement avant son utilisation pour l'hydrotraitement des essences. De même, la demande de brevet EP 0 745 660 A1 indique que le prétraitement d'un catalyseur afin de déposer entre 3 et 10% poids de coke améliore les performances catalytiques. Dans ce cas, il est précisé que le ratio C/H ne doit pas être supérieur à 0,7.

Afin d'améliorer la sélectivité, il est également possible d'optimiser la densité d'oxyde d'élément du groupe VIB par mètre carré de support. Ainsi la demande de brevet US 2004/0007504 préconise des valeurs de densité surfacique comprises entre 4.10⁻⁴ et 36.10⁻⁴ g d'oxyde d'élément du groupe VIB par m² de support.

Une autre voie permettant d'améliorer la sélectivité intrinsèque des catalyseurs est d'ajouter du phosphore. La demande brevet US 2005/0261124 A1 propose l'ajout de phosphore dans des proportions allant de 0,5 à 10% poids en phosphore par rapport au poids du catalyseur et le brevet US 6,746,598 B1 des proportions allant de 0,1 à 10%. Le phosphore est également utilisé comme dopant de l'activité d'hydrodésulfuration de charges hydrocarbonées comme illustré par les brevets US 4,880,525 et US 5,246,569.

Le document FR 2 917 647 décrit la préparation d'un catalyseur CoMoP ayant une surface spécifique supérieure à 150 m²/g utilisable pour hydrodésulfurer une essence de FCC.

Il existe donc encore aujourd'hui un vif intérêt chez les raffineurs pour des catalyseurs d'hydrodésulfuration de coupes essences toujours plus actifs et ayant une sélectivité en HDS par rapport à l'hydrogénation des oléfines améliorée et qui ainsi, une fois mis en œuvre, permettent de produire une essence à basse teneur en soufre sans réduction sévère de l'indice d'octane.

### Résumé de l'invention

La présente invention propose donc un catalyseur consistant en un support alumine, un métal choisi dans le groupe VIB et un métal choisi dans le groupe VIII du tableau périodique, et du phosphore, dans lequel ladite alumine est obtenue à partir d'un gel de boehmite malaxé et extrudé et dans lequel la surface spécifique dudit catalyseur déterminée selon la norme ASTM D3663-03 (méthode BET) est comprise entre 60 et 150 m²/g, dans lequel le métal du groupe Vlb est le molybdène et le métal du groupe VIII est le cobalt, et dans lequel la densité de molybdène exprimée en nombre d'atomes de molybdène par nm² de catalyseur est comprise entre 3 et 5, le rapport atomique Co/Mo est compris entre 0,3 et 0,5 et le rapport atomique P/Mo est compris entre 0,1 et 0,3.

De façon surprenante, les inventeurs ont en effet observé que des catalyseurs ayant un support alumine obtenu à partir d'alumine gel (ou gel de boehmite) et dont la surface spécifique est comprise entre 60 et 150 m²/g présentaient non seulement une activité en hydrodésulfuration mais également une sélectivité en HDS par rapport à l'hydrogénation des oléfines améliorées.

Dans le cadre de l'invention, la surface spécifique est déterminée selon la norme ASTM D3663-03 (méthode BET).

Le catalyseur selon l'invention comprend un support alumine présentant une phase gamma, delta ou thêta, seule ou en mélange.

Le catalyseur est constitué d'un support obtenu à partir d'alumine gel mis en forme par extrusion et une phase métallique active qui inclut du cobalt, du molybdène et du phosphore. La densité de molybdène exprimée en nombre d'atomes de molybdène par nm² de catalyseur est comprise entre 3 et 5, le rapport atomique Co/Mo est compris entre 0,3 et 0,5 et le rapport atomique P/Mo est compris entre 0,1 et 0,3.

Le catalyseur selon l'invention présente de préférence un volume poreux total, déterminé selon la méthode ASTM D4284, compris entre 0,60 et 1,00 mL/g et de préférence entre 0,70 et 0,90 mL/g.

Le catalyseur selon l'invention présente de préférence un diamètre poreux moyen (obtenu par la méthode ASTM D4284) supérieur à 8 nm, de préférence compris entre 10 et 50 nm.

Selon l'invention, le catalyseur présente une surface spécifique comprise entre 60 et 150 m²/g lorsque l'on cherche à obtenir des catalyseurs d'HDS ayant une sélectivité exacerbée. Ainsi selon un mode de réalisation selon l'invention, le catalyseur d'hydrodésulfuration à sélectivité améliorée en HDS par rapport à l'hydrogénation des oléfines est constitué d'un support d'alumine obtenu à partir d'alumine gel mis en forme par extrusion, une phase métallique active qui contient du cobalt, du molybdène et du phosphore et présente une densité de molybdène exprimée en nombre d'atomes de molybdène par nm² de catalyseur comprise entre 3 et 5, un rapport atomique Co/Mo compris entre 0,3 et 0,5, un rapport atomique P/Mo compris entre 0,1 et 0,3 et une surface spécifique de catalyseur comprise entre 60 et 150 m²/g, de préférence comprise entre 60 et 130 m²/g et de préférence comprise entre 70 et 90 m²/g.

On pourra utiliser un catalyseur à basse surface spécifique (e.g. entre 60 et 150 m²/g), donc particulièrement sélectif, lorsque l'essence à traiter contient peu de soufre mais une forte quantité d'oléfines afin de limiter au maximum l'hydrogénation de ces dernières et donc préserver l'indice d'octane.

L'invention se rapporte également à un procédé de préparation d'un catalyseur qui comprend les étapes suivantes :
a) on met en contact soit une solution aqueuse de sels acides d'aluminium avec une solution alcaline, soit une solution aqueuse de sels basiques d'aluminium avec une solution acide ne contenant pas d'aluminium, soit une solution aqueuse de sels acides d'aluminium avec une solution alcaline de sels d'aluminium, de sorte à former un gel de boehmite,
b) on malaxe ledit gel obtenu à l'étape a) dans un milieu acide ou basique.
c) on met en forme le gel malaxé issu de l'étape b) de sorte à former un support sous forme d'extrudé,
d) on traite thermiquement le support alumine obtenu à l'issue de l'étape c), de manière à obtenir une surface spécifique du support comprise entre 60 et 300 m²/g
e) on imprègne le support alumine issu de l'étape d) avec une solution aqueuse comprenant au moins un précurseur du métal choisi dans le groupe VIB et au moins un précurseur du métal choisi dans le groupe VIII du tableau périodique,
f) on traite thermiquement ledit support imprégné de métaux issu de l'étape e) de manière à obtenir une surface spécifique du catalyseur comprise entre 60 et 150 m²/g.

Selon un mode de réalisation préférée, le traitement thermique de l'étape d) comprend au moins une étape de traitement hydrothermal et au moins une étape de calcination, l'étape de traitement hydrothermal étant réalisée en présence d'eau dans une enceinte, à une température comprise entre 100 et 300°C pendant une durée comprise entre 0,5 et 8 heures et l'étape de calcination étant effectuée, après l'étape de traitement hydrothermal, sous air à une température comprise entre 400 et 1500°C pendant 1 et 8 heures.

Le traitement hydrothermal selon l'invention peut inclure une étape d'imprégnation du support avec une solution aqueuse acide avant la mise en température dudit support imprégné dans l'enceinte.

Selon un autre mode de réalisation, le traitement thermique de l'étape d) est une étape de calcination réalisée sous air, avec une teneur en eau dans l'air comprise entre 0 et 50% en poids, à une température comprise entre 400 et 1500°C pendant 1 à 8 heures.

De préférence avant l'étape de traitement thermique d), le support mis en forme est séché.

L'étape f) de traitement comprend au moins une étape de séchage du support imprégné de métaux à une température comprise entre 80 et 200°C, éventuellement suivie d'une étape de calcination à une température supérieure à 400°C. Selon un mode de réalisation préféré, le procédé de préparation du catalyseur selon l'invention comprend, après imprégnation des métaux sur le support, une étape de traitement thermique qui comprend une étape de séchage à une température comprise entre 80 et 200°C suivie d'une étape de calcination à une température supérieure à 400°C.

Enfin la présente invention concerne un procédé d'hydrodésulfuration d'une coupe essence issue d'unités de craquage catalytique dans lequel on met en contact de l'hydrogène et ladite coupe essence avec un catalyseur selon l'invention, à une température comprise entre 200 et 400°C, à une pression totale comprise entre 1 et 3 MPa et une Vitesse Volumique Horaire (VVH, définie comme étant le débit volumique de charge rapporté au volume de catalyseur) comprise entre 1 et 10 heure⁻¹. De préférence, l'hydrodésulfuration des essences mettant en œuvre les catalyseurs selon l'invention et en particulier les catalyseur à haute sélectivité en HDS par rapport à l'hydrogénation des oléfines est réalisé dans les conditions suivantes :
- une température comprise entre 230 et 330°C,
- une pression totale comprise entre 1,5 et 2,5 MPa,
- une Vitesse Volumique Horaire (VVH) comprise entre 2 et 6 h⁻¹,
- un rapport volumique hydrogène/charge essence compris entre 100 et 500 NI/I

Avant son utilisation dans un procédé d'hydrodésulfuration, les catalyseurs selon l'invention sont soumis à une étape de sulfuration afin de transformer les métaux sous forme oxyde en sulfure. Cette étape d'activation est avantageusement effectuée sous atmosphère sulfo-réductrice in-situ (dans l'unité d'hydrodésulfuration) ou ex-situ (en dehors de l'unité d'hydrodésulfuration), par toute méthode connue de l'homme du métier. Par exemple la sulfuration in-situ peut être réalisé en présence d'hydrogène et d'une charge composée d'agent sulfurant capable de libérer du soufre sous forme d'hydrogène sulfuré.

Le procédé d'hydrodésulfuration est particulièrement adapté pour traiter des essences issues d'unités de craquage catalytique (essence de FCC).

### Description détaillée de l'invention

### Procédé d'obtention du gel d'alumine (étape a) du procédé préparation du catalyseur)

Le catalyseur selon l'invention comprend un support alumine qui est obtenu à partir d'une alumine gel (ou gel d'alumine) qui comprend essentiellement un précurseur du type oxy(hydroxyde) d'aluminium (AIO(OH)) - également dénommé boehmite.

Selon l'invention, le gel d'alumine (ou autrement dénommé gel de boehmite) est synthétisé par précipitation de solutions basiques et/ou acides de sels d'aluminium induite par changement de pH ou tout autre méthode connue de l'homme de métier (P. Euzen, P. Raybaud, X. Krokidis, H. Toulhoat, J.L. Le Loarer, J.P. Jolivet, C. Froidefond, Alumina, in Handbook of Porous Solids, Eds F. Schüth, K.S.W. Sing, J. Weitkamp, Wiley-VCH, Weinheim, Germany, 2002, pp. 1591-1677).

Généralement la réaction de précipitation est effectuée à une température comprise entre 5°C et 80°C et à un pH compris entre 6 et 10. De manière préférée la température est comprise entre 35°C et 70°C et le pH est compris entre 6 et 10.

Selon un mode de réalisation, l'alumine gel est obtenue par mise en contact d'une solution aqueuse d'un sel acide d'aluminium avec une solution basique. Par exemple le sel acide d'aluminium est choisi dans le groupe constitué par le sulfate d'aluminium, le nitrate d'aluminium ou le chlorure d'aluminium et de manière préférée, ledit sel acide est le sulfate d'aluminium. La solution basique est préférentiellement choisi parmi la soude ou la potasse.

Alternativement, on peut mettre en contact une solution alcaline de sels d'aluminium qui peuvent être choisis dans le groupe constitué par l'aluminate de sodium et l'aluminate de potassium avec une solution acide. Dans une variante très préférée, le gel est obtenu par mise en contact d'une solution d'aluminate de sodium avec de l'acide nitrique. La solution d'aluminate de sodium présente avantageusement une concentration comprise entre 10⁻⁵ et 10⁻¹ mol.L⁻¹ et de manière préférée cette concentration est comprise entre 10⁻⁴ et 10⁻² mol.L⁻¹. Selon un autre mode de réalisation, l'alumine gel est obtenue par mise en contact d'une solution aqueuse de sels acides d'aluminium avec une solution alcaline de sels d'aluminium.

### Malaxage du gel d'alumine (étape b) du procédé préparation du catalyseur)

Le gel d'alumine obtenu après l'étape de précipitation est ensuite soumis à une étape de malaxage de préférence dans un milieu acide. L'acide mis en œuvre peut être par exemple de l'acide nitrique.

Cette étape est réalisée au moyen d'outils connus tels que des malaxeurs bras en Z, des malaxeurs à meules, des mono ou bi-vis continues permettant la transformation du gel en un produit ayant la consistance d'une pâte.

Selon un mode de réalisation avantageux, on apporte un ou plusieurs composés dits "agents porogènes" dans le milieu de malaxage. Ces composés présentent la propriété de se dégrader par chauffage et créer ainsi une porosité dans le support. Par exemple on peut utiliser comme composés porogènes la farine de bois, le charbon de bois, des goudrons, des matières plastiques.

### Mise en forme de la pâte (étape c) du procédé de préparation du catalyseur)

La pâte ainsi obtenue après malaxage est passée au travers d'une filière d'extrusion. Généralement les extrudés ont un diamètre compris entre 0,4 et 100 mm, de préférence entre 0,5 et 100 mm, de manière plus préférée entre 0,5 et 10 mm et de manière encore plus préférée entre 0,4 et 4 mm. Ces extrudés peuvent être de forme cylindrique, multilobée (par exemple trilobée ou quadrilobée).

Après sa mise en forme, le support est éventuellement séché avant de subir le traitement thermique selon l'étape d) du procédé. Par exemple le séchage est effectué à une température comprise entre 100 et 200°C.

### Traitement thermique du support alumine (étape d) du procédé préparation du catalyseur)

Le support extrudé subit ensuite une étape de traitement thermique qui permet de lui conférer des propriétés physiques répondant à l'application envisagée.

Ainsi, selon l'invention, le traitement thermique permet d'obtenir une surface spécifique du support, mesurée selon la norme ASTM D3663-03, comprise généralement entre 60 et 300 m²/g.

Selon un premier mode de réalisation, le traitement thermique comprend au moins une étape de traitement hydrothermal et au moins une étape de calcination qui est réalisée après l'étape de traitement hydrothermal.

On désigne par le terme "traitement hydrothermal", un traitement par passage en autoclave en présence d'eau à une température supérieure à la température ambiante.

Au cours de ce traitement hydrothermal, on peut traiter de différentes manières l'alumine mise en forme. Ainsi, on peut imprégner l'alumine d'une solution acide, préalablement à son passage à l'autoclave, le traitement hydrothermal de l'alumine étant fait soit en phase vapeur, soit en phase liquide, cette phase vapeur ou liquide de l'autoclave pouvant être acide ou non. Cette imprégnation, avant le traitement hydrothermal, peut être effectuée à sec ou par immersion de l'alumine dans une solution aqueuse acide. Par imprégnation à sec, on entend une mise en contact de l'alumine avec un volume de solution inférieur ou égal au volume poreux total de l'alumine traitée. De préférence, l'imprégnation est réalisée à sec.

On peut également traiter le support extrudé sans imprégnation préalable par une solution acide, l'acidité étant dans ce cas apportée par le liquide aqueux de l'autoclave.

La solution aqueuse acide comprend au moins un composé acide permettant de dissoudre au moins une partie de l'alumine des extrudés. On entend par "composé acide permettant de dissoudre au moins une partie de l'alumine des extrudés", tout composé acide qui, mis en contact avec les extrudés d'alumine, réalise la mise en solution d'au moins une partie des ions aluminium. L'acide doit, de préférence, dissoudre au moins 0,5 % en poids d'alumine des extrudés d'alumine.

De préférence, cet acide est choisi parmi les acides forts tels que l'acide nitrique, l'acide chlorhydrique, l'acide perchlorique, l'acide sulfurique ou un acide faible mis en œuvre à une concentration telle que sa solution aqueuse présente un pH inférieur à 4, tel que l'acide acétique, ou un mélange de ces acides.

Selon un mode préféré, on réalise le traitement hydrothermal en présence d'acide nitrique et d'acide acétique pris seul ou en mélange. L'autoclave est de préférence un autoclave à panier rotatif tel que celui défini dans la demande de brevet EP-A-0 387 109.

Le traitement hydrothermal peut également être réalisé sous pression de vapeur saturante ou sous une pression partielle de vapeur d'eau au moins égale à 70% de la pression de vapeur saturante correspondant à la température de traitement.

De préférence le traitement hydrothermal est conduit à une température comprise entre 100 et 300 °C, pendant 0,5 à 8 heures.

L'étape de calcination qui a lieu après l'autoclavage selon ce premier mode de réalisation se déroule à une température généralement comprise entre 400 et 1500°C, de préférence entre 800 et 1300°C, pendant 1 et 8 heures sous air dont la teneur en eau est généralement comprise entre 0 et 50% poids.

A titre d'exemple pour illustrer ce premier mode de réalisation de l'étape de traitement thermique d), le support séché issu de l'étape c) subit successivement une première étape de calcination, suivie d'une étape de traitement hydrothermal et enfin une deuxième étape de calcination.

Selon un second mode de réalisation alternatif de l'étape d), le support après mise en forme ne subit qu'un traitement thermique de calcination, c'est-à-dire qu'il n'y a pas de traitement hydrothermal avant ou après cette calcination. Celle-ci est réalisée à une température généralement comprise entre 400 et 1500°C, de préférence entre 500 et 1200°C, pendant 1 et 8 heures sous air ayant une teneur en eau généralement comprise entre 0 et 50% poids. Dans ce mode de réalisation il est également possible d'effectuer plusieurs étapes de calcination par paliers croissants de température jusqu'à atteindre la température finale de calcination désirée.

In fine, à l'issue du traitement thermique de l'étape d), le support a une surface spécifique généralement comprise entre 60 et 300 m²/g. Le support présente une structure cristallographique du type alumine delta, gamma ou thêta, seule ou en mélange. L'existence des différentes structures cristallographiques est liée notamment aux conditions de mises en œuvre du traitement thermique de l'étape d) et en particulier à la température de calcination finale.

### Dépôt des métaux sur le support (étape e) du procédé)

Cette étape consiste à déposer au moins un métal du groupe VIII et au moins un métal du groupe VIB, par exemple par imprégnation des éléments sur le support sélectionné. Cette imprégnation peut par exemple être réalisée selon le mode connu de l'homme du métier sous la terminologie d'imprégnation à sec, dans lequel on introduit la quantité d'éléments désirés sous forme de sels solubles dans le solvant choisi, par exemple de l'eau déminéralisée, de façon à remplir aussi exactement que possible la porosité du support. Le support ainsi rempli par la solution est de préférence laissé à maturer à une température ambiante en enceinte confinée saturé en eau de manière à permettre une diffusion homogène de la solution d'imprégnation contenant au sein de la porosité du support.

Le métal du groupe VIII (groupes 8, 9 ou 10 selon la nouvelle notation de la classification périodique des éléments : Handbook of Chemistry and Physics, 76ième édition, 1995-1996) est le cobalt.

Le métal du groupe VIB (groupe 6 selon la nouvelle notation de la classification périodique des éléments : Handbook of Chemistry and Physics, 76ième édition, 1995-1996) est le molybdène.

A titre d'exemple, des sels de métaux des groupes VIB et VIII pouvant être mise en œuvre pour le dépôt sont le nitrate de cobalt, l'heptamolybdate d'ammonium. Cependant tout autre précurseur présentant une solubilité suffisante peut également être utilisé. On peut également citer les hydroxydes, carbonates, acétates, carboxylates de métaux.

Selon un mode de réalisation préféré, le catalyseur comprend en outre du phosphore. L'élément phosphore peut être par exemple apporté sous forme d'acide phosphorique par exemple ajouté dans la solution d'imprégnation contenant les métaux du groupe VIII et VIB mais également ajouté à la synthèse du support (par exemple par comalaxage).

Pour faciliter la dissolution des précurseurs de métaux en solution d'imprégnation, on peut ajouter à ladite solution un ou plusieurs acides organiques tels que par exemple, l'acide acétique, l'acide citrique, l'acide oxalique, l'acide éthylène-diamine-tétraacétique (ou EDTA), l'acide trinitroacétique (ou NTA)

### Traitement thermique du catalyseur comprenant des métaux du procédé (étape f))

Cette étape consiste à sécher le catalyseur après l'étape (e) d'imprégnation de manière à éliminer l'eau résiduelle présente au sein de la porosité du support. Le séchage est conduit entre 80°C et 200°C.

Une dernière étape optionnelle de calcination à une température supérieure à 400°C peut être appliquée après l'étape de séchage. Cette dernière étape permet notamment d'éliminer les espèces azotés, présents lors de l'utilisation de précurseurs de type nitrate de cobalt et/ou heptamolybdate d'ammonium, sous forme d'oxydes d'azote.

Finalement le procédé de préparation permet d'obtenir des catalyseurs ayant une surface spécifique comprise entre 60 et 150 m²/g et et dans lequel la densité de molybdène exprimée en nombre d'atomes de molybdène par nm² de catalyseur est comprise entre 3 et 5, le rapport atomique Co/Mo est compris entre 0,3 et 0,5 et le rapport atomique P/Mo est compris entre 0,1 et 0,3.

### Exemples

### Exemple 1 (comparatif) : Préparation des alumines S1, S2 et S3 par décomposition rapide d'hydrargillite (dites alumines flash), conditions de mise en forme et traitements thermiques

La première étape consiste en une déshydratation rapide de Gibbsite à haute température (800°C) et à faible temps de contact (0,8 seconde), permettant l'obtention d'une poudre d'alumine de transition Khi. Un lavage permettant la diminution de la teneur en Na₂O est effectué à l'aide d'eau (3kg/kg d'Al₂O₃), suivi d'un second traitement de déshydratation rapide similaire au précédent, permettant également d'obtenir une poudre d'alumine. Cette poudre est ensuite mise en forme de bille par drageoir. Les billes ainsi obtenues sont séchés à 150°C puis calcinées à 500 °C afin d'obtenir le support S1.

Les supports S2 et S3 sont obtenus à partir du support précédent après séchage et auquel on a appliqué un traitement hydrothermal effectué à forte pression partielle d'eau (100%) pendant 8 heures puis une calcination respectivement à 650°C et 850°C.

La surface spécifique des supports S1, S2 et S3 est déterminée à l'azote selon la norme ASTM D3663-03. Le volume poreux total est déterminé par porosimétrie au mercure selon la norme ASTM D4284-03 (avec un angle de mouillage de 140°).

**Tableau 1. Caractéristiques des supports S1, S2 et S3.**

| Supports | S1 | S2 | S3 |
|---|---|---|---|
| S_{BET} (m²/g) | 256 | 134 | 69 |
| Volume poreux total (cc/g) | 0,50 | 1,04 | 0,61 |

### Exemple 2 (selon l'invention) : Préparation des alumines S4 à S8 par précipitation (dites alumines gel), conditions de mise en forme et traitements thermiques

Le gel d'alumine est synthétisé via un mélange d'aluminate de soude et de sulfate d'aluminium. La réaction de précipitation se fait à une température de 60°C, à un pH de 9, durant 60 min et sous une agitation de 200 tr/min. Le gel ainsi obtenu subit un malaxage sur un malaxeur bras en Z pour fournir la pâte. L'extrusion est réalisée par passage de la pâte à travers une filière munie d'orifice de diamètre 1,6 mm en forme de trilobe. Les extrudés ainsi obtenus sont séchés à 150°C puis calciné à 450°C sous air sec. Ce support est dénommé S4.

A partir du support S4, nous avons préparé les supports S5, S6, S7 et S8.

Le support S5 est obtenu après traitement hydrothermal du support S4 à 650°C en présence d'une solution aqueuse d'acide acétique à 6,5% poids pendant 3 heures en autoclave, puis calciné sous air sec à 1000°C pendant 2 heures en réacteur tubulaire.

Le support S6 est obtenu après un traitement hydrothermal du support S4 dans des conditions identiques au support S5 suivi d'une calcination sous air sec à 850°C pendant 2 heures en réacteur tubulaire.

Le support S7 est obtenu par calcination sous air sec du support S4 à 1050°C pendant 2 heures en réacteur tubulaire.

Le support S8 est obtenu après calcination sous air humide (50% d'eau/kg d'air sec) du support S4 à 850°C pendant 2 heures en réacteur tubulaire.

La surface spécifique des supports est déterminé à l'azote selon la norme ASTM D3663. Le volume poreux total des supports est déterminé par porosimétrie au mercure selon la norme ASTM D4284 (avec un angle de mouillage de 140°).

**Tableau 2. Caractéristiques des alumines S4 à S8.**

| Support | S4 | S5 | S6 | S7 | S8 |
|---|---|---|---|---|---|
| S_{BET} (m²/g) | 291 | 79 | 90 | 95 | 140 |
| Volume poreux total (cc/g) | 0,75 | 0,84 | 0,80 | 0,60 | 0,73 |

### Exemple 3 (comparatif) : Synthèse des catalyseurs CoMoP/alumine flash A1, A2 et A3

Les catalyseurs A1, A2 et A3 sont obtenus par imprégnation à sec d'une solution aqueuse préparée à partir d'oxyde de molybdène, d'hydroxyde de cobalt et d'acide phosphorique, le volume de ladite solution contenant les précurseurs de cobalt, de molybdène et de phosphore étant rigoureusement égal au volume poreux de la masse de support d'alumine. Les concentrations en précurseurs dans la solution aqueuse sont ajustées de manière à d'obtenir :
- une densité surfacique en molybdène fixée à environ 4 atomes de molybdène par nm² de catalyseur,
- des rapports atomiques Co/Mo et P/Mo respectivement égaux à 0,3 et 0,15.

Après une étape de maturation pendant 12 heures, le solide est séché pendant 12 heures à 120°C. Le solide est ensuite calciné sous air à 450°C pendant 2 heures.

**Tableau 3. Caractéristiques des catalyseurs A1, A2 et A3.**

| Catalyseur | A1 | A2 | A3 |
|---|---|---|---|
| Support | S1 | S2 | S3 |
| S_{BET} (m²/g - catalyseur) | 186 | 114 | 62 |
| CoO (% pds) | 2,8 | 2,3 | 0,95 |
| MoO₃ (% pds) | 18 | 11,3 | 6 |
| P₂O₅ (% pds) | 1,3 | 0,9 | 0,45 |

### Exemple 4 : Synthèse des catalyseurs CoMoP/alumine gel

Les catalyseurs A4 (comparatif), A5, A6, A7 et A8 (selon l'invention) sont obtenus par imprégnation à sec d'une solution aqueuse préparée à partir d'oxyde de molybdène, d'hydroxyde de cobalt et d'acide phosphorique, le volume de ladite solution contenant les précurseurs de cobalt, de molybdène et de phosphore étant rigoureusement égal au volume poreux de la masse de support d'alumine. Les concentrations en précurseurs dans la solution aqueuse sont ajustées de manière à obtenir pour les catalyseurs:
- une densité surfacique en molybdène fixée à environ 4 atomes de molybdène par nm² de catalyseur,
- des rapports atomiques Co/Mo et P/Mo respectivement égaux à 0,3 et 0,15.

Après une étape de maturation pendant 12 heures, le solide est séché pendant 12 heures à 120°C. Le solide est ensuite calciné sous air à 450°C pendant 2 heures.

**Tableau 4. Caractéristiques des catalyseurs A4, A5, A6 et A7.**

| Catalyseur | A4 | A5 | A6 | A7 | A8 |
|---|---|---|---|---|---|
| Support | S4 | S5 | S6 | S7 | S8 |
| S_{BET} (m²/g - catalyseur) | 207 | 72 | 81 | 85 | 118 |
| CoO (% pds) | 3,2 | 1,1 | 1,2 | 1,3 | 1,85 |
| MoO₃ (% pds) | 20 | 7 | 7,8 | 8,2 | 11,5 |
| P₂O₅ (% pds) | 1,5 | 0,52 | 0,58 | 0,6 | 0,85 |

### Exemple 5 : Évaluation des catalyseurs A1, A2, A3, A4, A5, A6, A7 et A8

Une charge modèle représentative d'une essence de craquage catalytique (FCC) contenant 10% poids de 2,3-diméthylbut-2-ène et 0,33% poids de 3-méthylthiophène (soit 1000 ppm pds de soufre dans la charge) est utilisée pour l'évaluation des performances catalytiques des différents catalyseurs. Le solvant utilisé est l'heptane.

La réaction d'hydrodésulfuration (HDS) est opérée dans un réacteur à lit fixe traversé sous une pression totale de 1,5 MPa, à 210°C, VVH = 6 h⁻¹ (VVH = débit volumique de charge/volume de catalyseur) en présence de 4 mL de catalyseur. Au préalable à la réaction d'HDS, le catalyseur est sulfuré in-situ à 450°C pendant 2 heures sous flux d'H₂ contenant 15 %mol. d'H₂S à pression atmosphérique.

Chacun des catalyseurs est placé successivement dans ledit réacteur. Des échantillons sont prélevés à différents intervalles de temps et sont analysés par chromatographie en phase gazeuse de façon à observer la disparition des réactifs et la formation des produits.

Les performances catalytiques des catalyseurs sont évaluées à partir de l'activité catalytique et de la sélectivité. L'activité HDS est exprimée à partir de la constante de vitesse pour la réaction d'HDS du 3-méthylthiophène (kHDS), normalisée par volume de catalyseur introduit, en supposant une cinétique d'ordre 1 par rapport au composé soufré. L'activité HydO est exprimée à partir de la constante de vitesse pour la réaction d'hydrogénation de l'oléfine (HydO), à savoir dans le cas présent pour la réaction d'hydrogénation du 2,3-diméthylbut-2-ène, normalisée par volume de catalyseur introduit, en supposant une cinétique d'ordre 1 par rapport à l'oléfine.

La sélectivité du catalyseur est exprimée en rapport normalisé des constantes de vitesse kHDS/kHydO. Le rapport kHDS/kHydO sera d'autant plus élevé que le catalyseur sera plus sélectif, signifiant une hydrogénation limitée du 2,3-diméthylbut-2-ène.

L'activité HDS et la sélectivité des catalyseurs supportés sont données dans les tableaux 5 et 6. Les valeurs sont normalisées en prenant le catalyseur A1 comme référence, c'est-à-dire que l'activité HDS et la sélectivité des catalyseurs A2 à A8 sont comparées en relatif à celles du catalyseur A1 pour lequel l'activité HDS et la sélectivité sont fixées à 100.

**Tableau 5. Sélectivité relative des catalyseurs A1, A2 et A3.**

| Catalyseurs | A1 | A2 | A3 |
|---|---|---|---|
| S_{BET} (m²/g de catalyseur) | 186 | 114 | 62 |
| Activité HDS relative | 100 | 78 | 63 |
| Sélectivité relative | 100 | 127 | 139 |

**Tableau 6. Sélectivité relative des catalyseurs A4, A5, A6, A7 et A8.**

| Catalyseurs | A4 | A5 | A6 | A7 | A8 |
|---|---|---|---|---|---|
| S_{BET} (m²/g de catalyseur) | 207 | 72 | 81 | 85 | 118 |
| Activité HDS relative | 148 | 83 | 86 | 88 | 97 |
| Sélectivité relative | 124 | 190 | 172 | 161 | 150 |

Pour les catalyseurs A4 (comparatif) et A5 à A8 (selon l'invention), nous constatons que le catalyseur à haute surface spécifique (A4) a une sélectivité légèrement en retrait par rapport aux catalyseurs basse et moyenne surface spécifique (A5 à A8). En revanche le catalyseur A4 présente une activité en hydrodésulfuration supérieure par rapport à ses homologues basse et moyenne surface spécifique.

On note également que le catalyseur A4 à haute surface spécifique (comparatif) est meilleur en terme de sélectivité et d'activité HDS par rapport au catalyseur A1 à surface spécifique pratiquement équivalent mais dont le support est une alumine flash.

Si l'on compare les catalyseurs basse surface (A5, A6, A7, A8) selon l'invention avec les catalyseurs A2 et A3 de l'art antérieur (support alumine flash), on observe que leur sélectivité et activité sont améliorées.

On note également que le catalyseur A4 à haute surface spécifique (selon l'invention) est meilleur en terme de sélectivité et d'activité HDS par rapport au catalyseur A1 à surface spécifique pratiquement équivalent mais dont le support est une alumine flash.

Si l'on compare les catalyseurs basse surface (A5, A6, A7, A8) selon l'invention avec les catalyseurs A2 et A3 de l'art antérieur (support alumine flash), on observe que leur sélectivité et activité sont améliorées.

## Revendications

1. Catalyseur consistant en un support alumine, un métal choisi dans le groupe VIB et un métal choisi dans le groupe VIII du tableau périodique, et du phosphore, dans lequel ladite alumine est obtenue à partir d'un gel de boehmite malaxé et extrudé et dans lequel la surface spécifique dudit catalyseur déterminée selon la norme ASTM D3663-03 (méthode BET) est comprise entre 60 et 150 m²/g, dans lequel le métal du groupe Vlb est le molybdène et le métal du groupe VIII est le cobalt, et dans lequel la densité de molybdène exprimée en nombre d'atomes de molybdène par nm² de catalyseur est comprise entre 3 et 5, le rapport atomique Co/Mo est compris entre 0,3 et 0,5 et le rapport atomique P/Mo est compris entre 0,1 et 0,3.

2. Catalyseur selon la revendication 1, dans lequel le support alumine comprend une alumine gamma, delta ou thêta, seule ou en mélange.

3. Procédé d'hydrodésulfuration d'une coupe essence issue d'unités de craquage catalytique dans lequel on met en contact de l'hydrogène et ladite coupe essence avec un catalyseur selon l'une des revendications 1 à 2, à une température comprise entre 200 et 400°C, à une pression totale comprise entre 1 et 3 MPa et une Vitesse Volumique Horaire (VVH) comprise entre 1 et 10 heure⁻¹.

## Patentansprüche

1. Katalysator, bestehend aus einem Aluminiumoxid-Träger, einem Metall, ausgewählt aus der Gruppe VIB, und einem Metall, ausgewählt aus der Gruppe VIII des Periodensystems, und Phosphor, wobei das Aluminiumoxid aus einem gemischten und extrudierten Böhmit-Gel erhalten wird, und wobei die spezifische Oberfläche des Katalysators, bestimmte gemäß der Norm ASTM D3663-03 (BET Verfahren) zwischen 60 und 150 m²/g liegt, wobei das Metall der Gruppe VIB Molybdän ist, und das Metall der Gruppe VIII Kobalt ist, und wobei die Dichte des Molybdäns, ausgedrückt als Anzahl der Atome von Molybdän pro nm² des Katalysators, zwischen 3 und 5 liegt, das Atomverhältnis von Co/Me zwischen 0,3 und 0,5 liegt, und das Atomverhältnis von P/Mo zwischen 0,1 und 0,3 liegt.

2. Katalysator nach Anspruch 1, wobei der Aluminiumoxid-Träger ein gamma-, delta- oder theta-Aluminiumoxid, allein oder in Mischung, umfasst.

3. Verfahren zur Hydrodesulfurierung eines Benzinschnitts aus katalytischen Krack-Einheiten, wobei Wasserstoff und der Benzinschnitt mit einem Katalysator nach einem der Ansprüche 1 bis 2 in Berührung gebracht werden, bei einer Temperatur zwischen 200 und 400 °C, bei einem Gesamtdruck zwischen 1 und 3 MPa und bei einer stündlichen Volumengeschwindigkeit (VVH) zwischen 1 und 10 Stunde⁻¹.

## Claims

1. A catalyst consisting of an alumina support, one metal selected from group VIB and one metal selected from group VIII of the periodic table, and phosphorus, in which said alumina is obtained from a kneaded and extruded boehmite gel, and in which the specific surface area of said catalyst determined in accordance with the ASTM standard D3663-03 (BET method) is in the range 60 to 150 m²/g, in which the metal from group VIB is molybdenum and the metal from group VIII is cobalt, in which the density of molybdenum, expressed as the number of atoms of molybdenum per nm of catalyst, is in the range 3 to 5, the Co/Mo atomic ratio is in the range 0.3 to 0.5 and the P/Mo atomic ratio is in the range 0.1 to 0.3.

2. The catalyst according to claim 1, in which the alumina support comprises a gamma, delta or theta alumina, alone or as a mixture.

3. A process for the hydrodesulphurization of a gasoline cut obtained from catalytic cracking units, in which hydrogen and said gasoline cut are brought into contact with a catalyst in accordance with one of claims 1 to 2, at a temperature in the range 200°C to 400°C, at a total pressure in the range 1 to 3 MPa and with an hourly space velocity (HSV) in the range 1 to 10 hour-I.
